# EUROPEAN PATENT APPLICATION

(11) **EP 4 047 973 A1**
(43) Date of publication of application: **24.08.2022**
(21) Application number: 19949140.8
(22) Date of filing: 15.10.2019
(51) Int. Cl.: H04W 16/14, H04W 72/04, H04W 72/08

(54) **TERMINAL**

(71) Applicant: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP); KUMAGAI Shinya, Tokyo 100-6150 (JP)
(74) Representative: Hoffmann Eitle
(86) International application number: PCT/JP2019/040455
(87) International publication number: WO 2021/074951

(57) **Abstract**

UE 200 measures a radio signal based on an RSSI measurement window applied to a second frequency band when using the second frequency band different from a first frequency band allocated for mobile communication.

## Description

### Technical Field

The present invention relates to a terminal that executes radio communication, and more particularly to, a terminal that uses an unlicensed frequency band.

### Background Art

The 3rd generation partnership project (3GPP) is progressing specification of long term evolution (LTE) and LTE-Advanced (hereinafter, referred to as LTE including LTE-Advanced) for the purpose of further speeding up the LTE, and specification of 5th generation mobile communication system (5G, referred to as new radio (NR) or next generation (NG)).

For example, similar to the LTE, even in the NR, new radio-unlicensed (NR-U) for expanding an available frequency band by using spectrum of an unlicensed frequency band is being studied (Non Patent Literature 1).

In the NR-U, a radio base station (gNB) executes carrier sense before starting transmission of a radio signal in the unlicensed frequency band, and application of a listen-before-talk (LBT) mechanism that enables transmission within a predetermined time length is being studied only when it is confirmed that a channel was not used by another system therearound.

Specifically, in order to cope with a problem of a so-called "hidden terminal" that is hardly discovered from the radio base station (gNB), as in licensed-assisted access (LAA) of LTE, it has been considered that the terminal (user equipment (UE)) measures a received signal strength indicator (RSSI) which is received power of an entire predetermined band within an unlicensed frequency band (Non Patent Literature 2).

Regarding the RSSI measurement for the NR, it is discussed as cross link interference (CLI) in 3GPP (Non Patent Literature 3). The CLI mainly aims at reducing mutual interference, and the RSSI measurement for measuring the mutual interference is defined, which can define a size and position of an RSSI measurement window (frequency direction and time direction).

### Citation List

### Non Patent Literature

Non Patent Literature 1: 3GPP TR 38.889 V16.0.0, 3rd Generation Partnership Project; Technical Specification Group Radio Access Network; Study on NR-based access to unlicensed spectrum (Release 16), 3GPP, December, 2018
Non Patent Literature 2: "Feature lead summary #2 of Enhancements to initial access procedure", R1-1903221, 3GPP TSG RAN WG1 Meeting #96, 3GPP, March, 2019
Non Patent Literature 2: "LS on RRC parameters for NR CLI-handling", R1-1903836, 3GPP TSG RAN WG1 Meeting #96, 3GPP, March, 2019

### Summary of Invention

In the case of the NR-U, since a bandwidth of an LBT band (LBT sub-band) is different from that of the NR, even if the RSSI measurement window of the CLI is applied as it is, there are cases where the RSSI cannot be measured efficiently.

Therefore, the present invention has been made in view of such a situation, and an object of the present invention is to provide a terminal capable of efficiently performing measurement of a radio signal in NR-U using an unlicensed frequency band.

According to an aspect of the present disclosure, a terminal (UE 200) includes a receiving unit (radio signal transmitting and receiving unit 210) that receives a radio signal, and a control unit (control unit 270) that measures the radio signal based on a measurement window (RSSI measurement window) applied to a second frequency band when using the second frequency band (unlicensed frequency band Fu) different from a first frequency band allocated for mobile communication.

### Brief Description of Drawings

Fig. 1 is an overall schematic configuration diagram of a radio communication system 10.
Fig. 2 is a diagram illustrating a frequency range used in the radio communication system 10.
Fig. 3 is a diagram illustrating a configuration example of radio frames, subframes, and slots used in the radio communication system 10.
Fig. 4 is a functional block configuration diagram of UE 200.
Fig. 5 is a diagram illustrating a configuration example of an RSSI measurement window according to a CLI-RSSI measurement regulation of NR.
Fig. 6 is a diagram illustrating a configuration example of an RSSI measurement window according to an LBT sub-band of NR-U.
Fig. 7 is a diagram illustrating an example of an initial access sequence using the NR-U including RSSI measurement by UE 200.
Fig. 8 is a diagram illustrating an example of a hardware configuration of the UE 200.

### Description of Embodiments

Hereinafter, embodiments will be described with reference to the drawings. Note that the same functions or configurations will be denoted by the same or similar reference numerals, and a description thereof will be appropriately omitted.

### (1) Overall Schematic Configuration of Radio Communication System

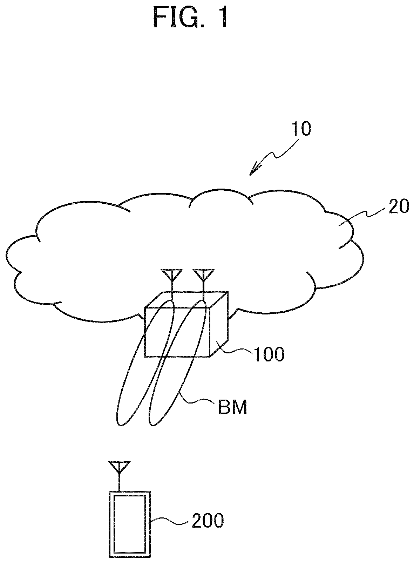

Fig. 1 is an overall schematic configuration diagram of a radio communication system 10 according to the present embodiment. The radio communication system 10 is a radio communication system according to 5G new radio (NR), and includes a next generation-radio access network 20 (hereinafter, referred to as NG-RAN 20) and a user terminal 200 (hereinafter, UE 200).

The NG-RAN 20 includes a radio base station 100 (hereinafter, gNB 100). Note that a specific configuration of the radio communication system 10 including the numbers of gNBs and UEs is not limited to an example illustrated in Fig. 1.

The NG-RAN 20 actually includes a plurality of NG-RAN nodes, specifically, gNBs (or ng-eNBs), and is connected to a 5G core network (5GC) (not illustrated). Note that the NG-RAN 20 and the 5GC may be simply expressed as "network".

The gNB 100 is a 5G radio base station, and executes 5G radio communication with the UE 200. The gNB 100 and the UE 200 can support massive multiple-input multiple-output (MIMO) that generates a beam (BM) with higher directivity, carrier aggregation (CA) that bundles and uses a plurality of component carriers (CCs), dual connectivity (DC) that simultaneously performs communication between the UE and each of two NG-RAN nodes, and the like, by controlling radio signals transmitted from a plurality of antenna elements.

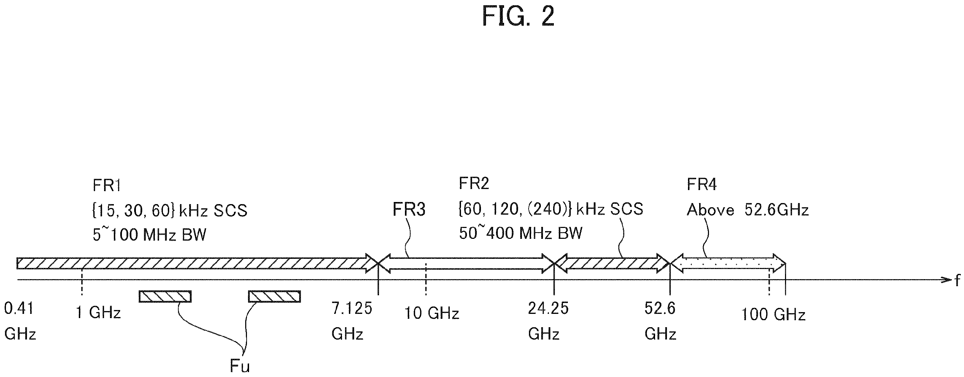

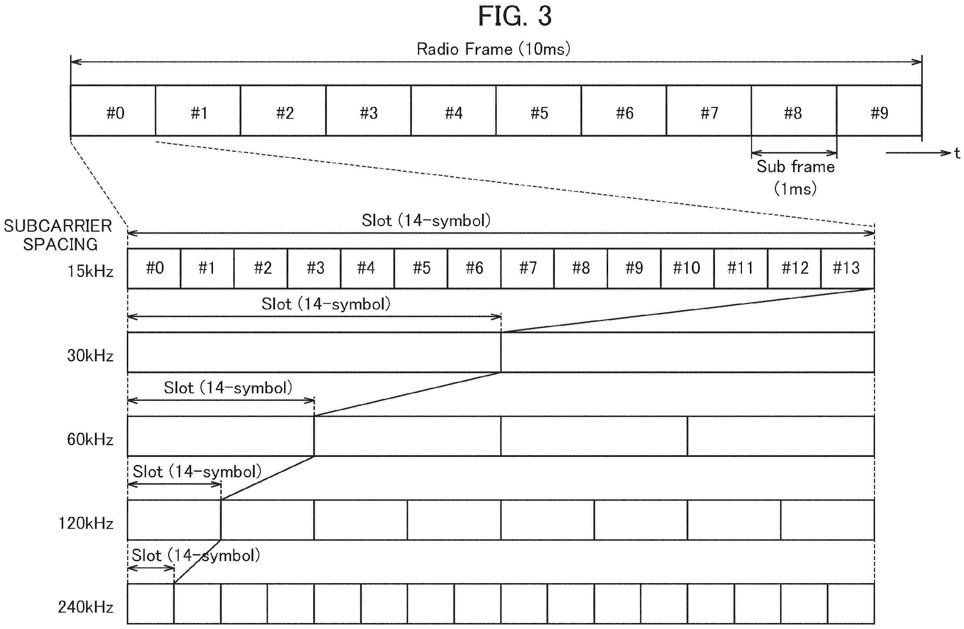

The radio communication system 10 supports a plurality of frequency ranges (FRs). Fig. 2 illustrates a frequency range used in the radio communication system 10. In addition, Fig. 3 illustrates a configuration example of radio frames, subframes, and slots used in the radio communication system 10.

As illustrated in Fig. 2, the radio communication system 10 corresponds to FR1 and FR2. Frequency bands of each FR are as follows.

- FR1: 410 MHz to 7.125 GHz
- FR2: 24.25 GHz to 52.6 GHz

In the FR1, subcarrier spacing (SCS) of 15, 30, or 60 kHz is used and a bandwidth (BW) of 5 to 100 MHz is used. The FR2 has a frequency higher than that of the FR1, the SCS of 60 or 120 kHz (240 kHz may be included) is used, and a bandwidth (BW) of 50 to 400 MHz is used.

Note that the SCS may be interpreted as numerology. The numerology is defined in 3GPP TS38.300 and corresponds to one subcarrier spacing in a frequency domain.

Further, the radio communication system 10 may correspond to a frequency band range higher than that of the FR2. For example, the radio communication system 10 may support a frequency band exceeding 52.6 GHz and up to 114.25 GHz. Here, such a high frequency band is referred to as "FR4" for convenience. The FR4 belongs to so-called EHF (extremely high frequency, referred to as a millimeter wave). Note that the FR4 is a tentative name and may be called another name.

Further, the FR4 may be further divided. For example, the FR4 may be divided into a frequency range of 70 GHz or lower and a frequency range of 70 GHz or higher. Alternatively, the FR4 may be divided into more frequency ranges, or may be divided into frequencies other than 70 GHz.

In addition, here, the frequency band between the FR2 and the FR41 is referred to as "FR3" for convenience. The FR3 is a frequency band above 7.125 GHz and less than 24.25 GHz.

In the present embodiment, the FR3 and FR4 are different from a frequency band including the FR1 and FR2, and are called different frequency bands.

Further, in the radio communication system 10, in addition to the frequency band (first frequency band) allocated for the radio communication system 10, an unlicensed frequency band Fu (second frequency band) different from the frequency band is also used. Specifically, the radio communication system 10 can execute new radio-unlicensed (NR-U) that expands an available frequency band by using spectrum of an unlicensed frequency band.

The frequency band allocated for the radio communication system 10 is a frequency band that is included in the frequency ranges of the FR1, the FR2, and the like described above and is based on license allocation by the government.

The unlicensed frequency band Fu is a frequency band that does not require the license allocation by the government and can be used without being limited to a specific communication carrier. For example, a frequency band (2.4 GHz, 5 GHz band, or the like) for a wireless LAN (WLAN) may be described.

In the unlicensed frequency band Fu, it is possible to install a radio station not limited to the specific communication carrier, but it is not preferable to significantly degrade communication performance due to mutual interference of signals from nearby radio stations.

Therefore, for example, in Japan, as a requirement for a radio system using the unlicensed frequency band Fu (for example, 5 GHz band), the gNB 100 performs carrier sense prior to starting transmission, and a listen-before-talk (LBT) mechanism that enables transmission within a predetermined time length only when it is confirmed that a channel is not used by other systems therearound is applied. Note that the carrier sense is a technology of confirming whether or not the frequency carrier is used for other communications before to emitting a radio wave.

Further, in the case of the NR-U, in order to cope with a problem of a so-called "hidden terminal" that is hardly discovered from the radio base station (gNB), the UE 200 can measure a received signal strength indicator (RSSI) which is received power of a band (for example, an entire LBT sub-band) within an unlicensed frequency band Fu.

When the gNB 100 performs the carrier sense and can confirm that the channel is not used by other systems therearound, a reference signal for radio link monitoring, specifically, radio link monitoring-reference signal (RLM-RS) is transmitted to an inside of a formed cell.

The RLM-RS may include a discovery reference signal (DRS), synchronization signal/physical broadcast channel (SS/PBCH) blocks (SSB), and channel state information-RS (CSI-RS). Further, the DRS may include CSI-RS, a remaining minimum system information-control resource sets (RMSI-CORSET), or a physical downlink shared channel (PDSCH) associated with the SSB.

The RMSI-CORSET is CORESET for Type0-PDCCH common search space (Type0-PDCCH CSS) set, the UE 200 determines several consecutive resource blocks (RBs) and symbols for RMSI-CORSET, and sets monitoring occasion (MO) of a physical downlink control channel (PDCCH), specifically, Type 0 PDCCH for decoding a system information block (SIB) based on the determined RBs and symbols.

### (2) Functional Block Configuration of Radio Communication System

Next, a functional block configuration of the radio communication system 10 will be described. Specifically, a functional block configuration of the UE 200 will be described.

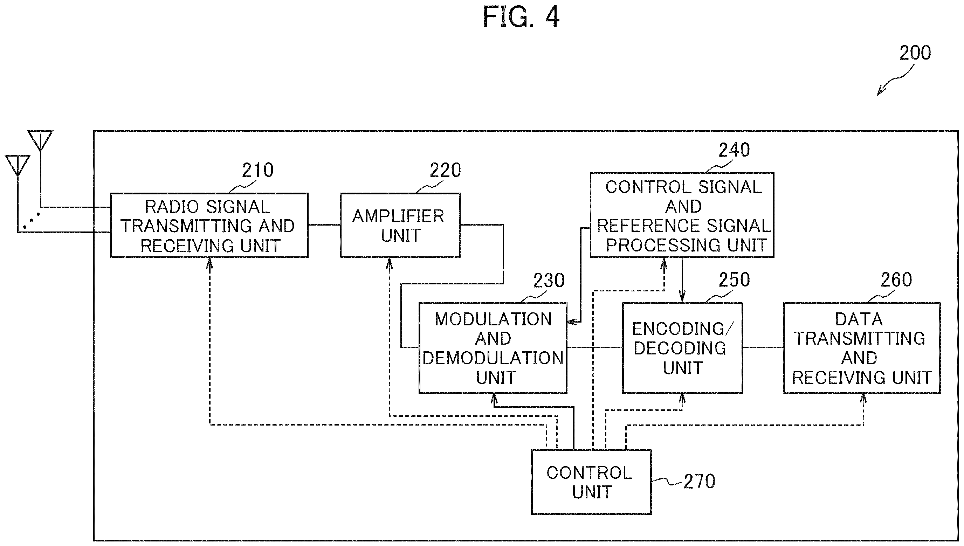

Fig. 4 is the functional block configuration diagram of the UE 200. As illustrated in Fig. 4, the UE 200 includes a radio signal transmitting and receiving unit 210, an amplifier unit 220, a modulation and demodulation unit 230, a control signal and reference signal processing unit 240, an encoding/decoding unit 250, a data transmitting and receiving unit 260, and a control unit 270.

The radio signal transmitting and receiving unit 210 transmits and receives a radio signal according to NR. The radio signal transmitting and receiving unit 210 corresponds to Massive MIMO, CA used by bundling a plurality of CCs, DC performing simultaneous communication between the UE and each of the two NG-RAN nodes, and the like. In the present embodiment, the radio signal transmitting and receiving unit 210 constitutes a receiving unit that receives a radio signal.

The amplifier unit 220 is configured by a power amplifier (PA)/low noise amplifier (LNA) or the like. The amplifier unit 220 amplifies a signal output from the modulation and demodulation unit 230 to a predetermined power level. Further, the amplifier unit 220 amplifies an RF signal output from the radio signal transmitting and receiving unit 210.

The modulation and demodulation unit 230 executes data modulation and demodulation, transmit power setting, resource block allocation, and the like for each predetermined communication destination (gNB 100 or other gNBs).

The control signal and reference signal processing unit 240 executes processing regarding various control signals transmitted and received by the UE 200 and processing regarding various reference signals transmitted and received by the UE 200.

Specifically, the control signal and reference signal processing unit 240 receives various control signals transmitted from the gNB 100 via a predetermined control channel, for example, a control signal of a radio resource control layer (RRC). In addition, the control signal and reference signal processing unit 240 transmits various control signals to the gNB 100 via a predetermined control channel.

The control signal and reference signal processing unit 240 executes processing using a reference signal (RS) such as a demodulation reference signal (DMRS) and a phase tracking reference signal (PTRS).

Further, the DMRS is a known reference signal (pilot signal) between a base station for each terminal and a terminal for estimating a fading channel used for data demodulation. The PTRS is a reference signal for each terminal for the purpose of estimating phase noise which is a problem in a high frequency band.

In addition to the DMRS and the PTRS, the reference signal also includes a channel state information-reference signal (CSI-RS) and a sounding reference signal (SRS). Further, the reference signal also includes the RLM-RS, as described above.

Further, the channel includes a control channel and a data channel. The control channel includes a physical downlink control channel (PDCCH), a physical uplink control channel (PUCCH), a physical random access channel (PRACH), a physical broadcast channel (PBCH), and the like.

In addition, the data channel includes a physical downlink shared channel (PDSCH), a physical uplink shared channel (PUSCH), and the like. The data means data transmitted via the data channel.

The control signal and reference signal processing unit 240 can receive band information indicating a band in which the radio signal is measured within the unlicensed frequency band Fu. In the present embodiment, the control signal and reference signal processing unit 240 constitutes an information receiving unit.

For example, the control signal and reference signal processing unit 240 can receive system information, specifically, band information included in a system information block (SIB). Note that a type of the SIB used for notification of the band information by the network is not particularly limited, and the system information may be a master information block (MIB).

Further, the band information may specifically mean a band for LBT, that is, an LBT sub-band (20 MHz), but is not necessarily limited to the LBT sub-band. For example, the band for LBT may be a band within the unlicensed frequency band Fu, and can discover the so-called "hidden terminal" and has only to be measured by the UE 200. However, it is desirable to assume that the band to be measured such as the LBT sub-band is narrower than the band of the RSSI measurement window defined as the cross link interference (CLI) of the NR. As will be described later, the band information may be a bitmap or the like associated with the LBT sub-band.

The encoding/decoding unit 250 executes data division/concatenation and channel encoding/decoding for each predetermined communication destination (gNB 100 or other gNB).

Specifically, the encoding/decoding unit 250 divides data output from the data transmitting and receiving unit 260 into a predetermined size, and executes the channel encoding on the divided data. Further, the encoding/decoding unit 250 decodes data output from the modulation and demodulation unit 230 and concatenates the decoded data.

The data transmitting and receiving unit 260 executes transmission and reception of a protocol data unit (PDU) and a service data unit (SDU). Specifically, the data transmitting and receiving unit 260 executes assembling and disassembling of the PDU/SDU and the like in a plurality of layers (such as medium access control layer (MAC), radio link control layer (RLC), packet data convergence protocol layer (PDCP), and the like). Further, the data transmitting and receiving unit 260 executes data error correction and retransmission control based on hybrid automatic repeat request (hybrid ARQ).

A control unit 270 controls each functional block constituting the UE 200. In particular, in the present embodiment, the control unit 270 executes control regarding NR-U.

Specifically, the control unit 270 can measure the radio signal based on the measurement window applied to the unlicensed frequency band Fu when using the unlicensed frequency band Fu (second frequency band, which may be referred to as the unlicensed band) different from the frequency band (first frequency band), that is, the licensed frequency band (which may be referred to as the licensed band) allocated for mobile communication, that is, executing the NR-U.

More specifically, the control unit 270 measures the RSSI of the entire band with respect to a predetermined band within the unlicensed frequency band Fu based on the RSSI measurement window applied to the unlicensed frequency band Fu.

Note that the control unit 270 do not necessarily measure the RSSI of the band, but may measure a value based on another index indicating the received power of the entire band. Further, as described above, the band typically means units of an LBT sub-band (20 MHz), a plurality of LBT sub-bands, or a half band of the LBT sub-band, and the like.

The control unit 270 may measure a radio signal based on a measurement window corresponding to one or a plurality of bands (LBT sub-bands) within the unlicensed frequency band Fu. Specifically, the control unit 270 may measure the RSSI of the band based on the RSSI measurement windows corresponding to the plurality of bands (LBT sub-bands).

The control unit 270 may measure the radio signal based on a start position of a radio resource corresponding to the measurement window. Specifically, the control unit 270 determines a position of the RSSI measurement window in the NR-U based on a start index of a physical resource block (PRB) (may be referred to as starting PRB index (startPRB)) corresponding to a band to be measured which is included in an RRC message.

The control unit 270 can determine the RSSI measurement window corresponding to the band (LBT sub-band) within the unlicensed frequency band Fu based on the band information received by the control signal and reference signal processing unit 240. That is, as described above, the control unit 270 can determine the band (LBT sub-band) within the unlicensed frequency band Fu which is the measurement target of the RSSI, based on the band information which is included in, for example, the SIB and indicates the LBT sub-band of the measurement target of one or a plurality of RSSIs includes.

### (3) Operation of Radio Communication System

Next, an operation of the radio communication system 10 will be described. Specifically, in the NR-U, the measurement operation of the RSSI in the band within the unlicensed frequency band Fu will be described.

### (3.1) Prerequisite Operation

In 3GPP, in order to cope with the problem of the "hidden terminal" (detecting the hidden terminal) when the NR-U is executed, it is agreed to support the same RSSI measurement function as licensed-assisted access (LAA) of LTE (Release 13) and the report of the channel occupancy.

In addition, in the 3GPP, the RSSI measurement for the NR is discussed as the cross link interference (CLI) and summarized as parameters of an RRC layer (for example, see Non Patent Literature 3 described above).

For example, the starting PRB index (startPRB) of the bandwidth that is the measurement target of the RSSI is defined as follows.

- When the reference SCS is less than an active downlink (DL) bandwidth part (BWP) SCS, the network sets startPRB and nrofPRB as multiples of a value obtained by dividing the active BW SCS by the reference SCS.

In addition, the nrofPRB indicating the allowable size of the band to be measured is defined as follows.

- Only a multiple of 4, which is the number of PRBs corresponding to a width of the CLI-RSSI measurement resource, is allowed. The minimum number that can be set is 4 PRBs and a width of an active DL BWP. When the set value is greater than the width of the active DL BWP, the terminal (UE 200) assumes that the actual band of the CLI-RSSI measurement is within the active DL BWP.

### (3.2) Operation in NR-U

In the case of the NR-U, the following problems occur according to the CLI-RSSI measurement regulation described above. Specifically, in the case of the NR-U, the LBT sub-band, which is the band for LBT, is 20 MHz, and since it is assumed that the plurality of LBT sub-bands that have succeeded in the LBT are bundled and used, according to the CLI-RSSI measurement regulation, the RSSI measurement for each LBT sub-band is desirable, so the number of RSSI measurement windows to be measured may be insufficient.

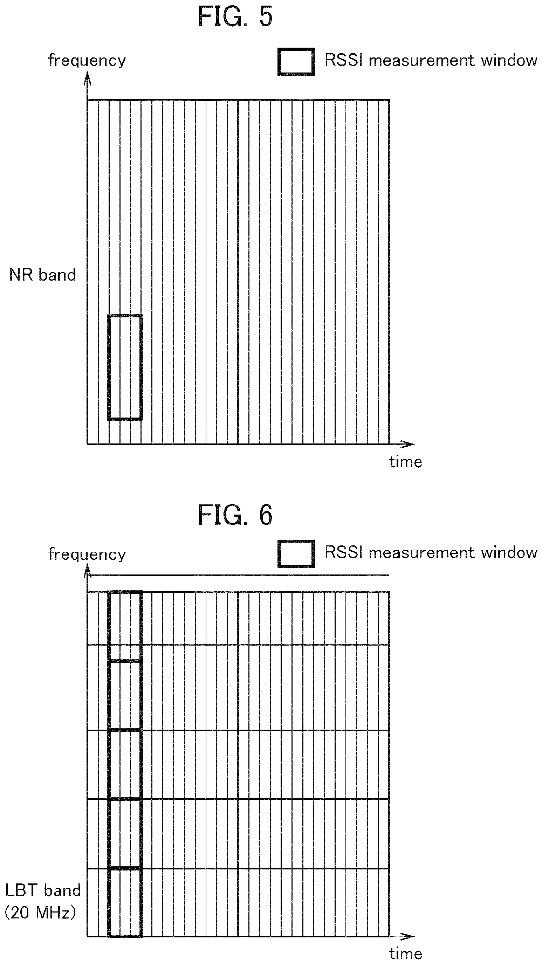

Fig. 5 is a diagram illustrating a configuration example of the RSSI measurement window according to the CLI-RSSI measurement regulation of the NR. On the other hand, Fig. 6 is a diagram illustrating a configuration example of the RSSI measurement window according to the LBT sub-band of the NR-U.

As illustrated in Figs. 5 and 6, comparing the RSSI measurement window according to the CLI-RSSI measurement regulation of the NR with the RSSI measurement window according to the LBT sub-band of the NR-U, the number of RSSI measurement windows according to the CLI-RSSI measurement regulation of the NR does not match the number of RSSI measurement windows according to the LBT sub-band of the NR-U.

Specifically, the number of RSSI measurement windows according to the CLI-RSSI measurement regulation is one, while the number of RSSI measurement windows according to the LBT sub-band is plural.

That is, it is not appropriate to apply the method of configuring the RSSI measurement window according to the CLI-RSSI measurement regulation to the RSSI measurement window in the NR-U.

Therefore, in this operation example, in the case of the NR-U, the terminal measures the RSSI for each LBT sub-band as illustrated in Fig. 6.

That is, in this operation example, the RSSI measurement window can be configured in units of LBT sub-band. Note that as described above, the size of the RSSI measurement window may include the plurality of LBT sub-bands, and may include up to five LBT sub-bands in consideration of the NR regulation, unlicensed frequency band Fu, and the like.

In addition, the RSSI measurement window may be configured for each LBT sub-band, or the plurality of RSSI measurement windows associated with each startPRB value of up to five LBT sub-bands may be configured.

### (3.3) Operation Example

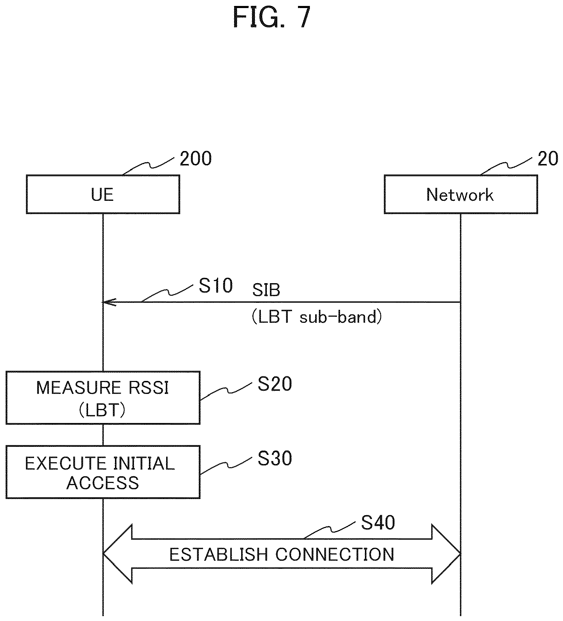

Fig. 7 illustrates an example of the initial access sequence using the NR-U including the RSSI measurement by the UE 200. As illustrated in Fig. 7, the UE 200 receives the band information included in the SIB (S10). Specifically, the UE 200 receives the information associated with the LBT sub-band.

As the information associated with the LBT sub-band, it is possible to use a bitmap that can identify the LBT sub-band. For example, when up to five LBT sub-bands are configured, a 5-bit bitmap may be used.

However, the information does not necessarily have to be a bitmap, and may be information that directly indicates the LBT sub-band number.

Further, in the case of the initial access, the SIB can typically use the SIB1, but the MIB or another SIB may be used. Furthermore, the notification of the band information by the network is not essential, and the UE 200 may select a predetermined LBT sub-band as a measurement target.

The UE 200 measures the RSSI in the LBT sub-band based on the acquired band information (information of LBT sub-band) (S20).

Specifically, the UE 200 measures the received power in the entire LBT sub-band within the unlicensed frequency band Fu.

The UE 200 determines based on the LBT result that the communication (NR-U) using the LBT sub-band of the unlicensed frequency band Fu is possible, and executes the initial access (S30).

Specifically, the UE 200 executes a random access (RA) procedure using measurement of an SS/PBCH block (SSB) that is composed of a synchronization signal (SS) and a downlink physical broadcast channel (PBCH) and an occasion of a physical random access channel (PRACH) (PRACH occasion (RO)) .

When the initial access is completed, the UE 200 and the network establish a connection (including an RRC connection and the like) (S40).

### (4) Action and Effect

According to the embodiment described above, the following effects can be obtained. Specifically, the UE 200 can measure the radio signal based on the measurement window applied to the unlicensed frequency band Fu when using the unlicensed frequency band Fu (second frequency band, which may be referred to as the unlicensed band) different from the frequency band (first frequency band), that is, the licensed frequency band allocated for mobile communication, that is, executing the NR-U.

More specifically, the UE 200 measures the RSSI of the band (LBT sub-band) within the unlicensed frequency band Fu based on the RSSI measurement window applied to the unlicensed frequency band Fu.

As described above, the bandwidth (20 MHz) of the LBT sub-band is different from the bandwidth of the NR, but in the present embodiment, since the size of the RSSI measurement window according to the LBT sub-band of the NR-U can be applied, even in the case of the NR-U using the unlicensed frequency band Fu, the efficient measurement of the radio signal, specifically, the RSSI can be realized. As a result, the efficient LBT can be realized.

In the present embodiment, the UE 200 may measure the RSSI based on the measurement window corresponding to one or a plurality of bands (LBT sub-bands) within the unlicensed frequency band Fu. Therefore, it is possible to realize the efficient RSSI measurement and the LBT in units of the LBT sub-band defined in the NR-U.

In the present embodiment, it is possible to measure the RSSI based on the start position (startPRB) of the radio resource corresponding to the measurement window. Therefore, the UE 200 can easily and reliably specify the position of the measurement window.

In the present embodiment, the UE 200 can determine the measurement window corresponding to the band (LBT sub-band) within the unlicensed frequency band Fu based on the band information included in the SIB or the like received from the network. Therefore, the band within the unlicensed frequency band Fu to be measured can be designated by the initiative of the network, and more efficient RSSI measurement and LBT can be realized.

### (5) Other Embodiments

Although the contents of the present invention have been described hereinabove with reference to the embodiments, it is obvious to those skilled in the art that the present invention is not limited to these descriptions, and can be variously modified and improved.

For example, the unlicensed frequency band may be referred to by a different name. For example, terms such as license-exempt or licensed-assisted access (LAA) may be used.

Further, as described above, the RSSI may be called a different name as long as the RSSI means the received power of the entire band within the unlicensed frequency band Fu. Similarly, the measurement window may be called different names such as a measurement range and a measurement section.

In addition, the block configuration diagram (Fig. 4) used for described the above-described embodiment illustrates blocks of functional unit. Those functional blocks (structural components) can be realized by a desired combination of at least one of hardware and software. Methods for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices described above.

Functions include determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting may be called a transmitting unit or a transmitter. For any of the above, as described above, the realization method is not particularly limited to any one method.

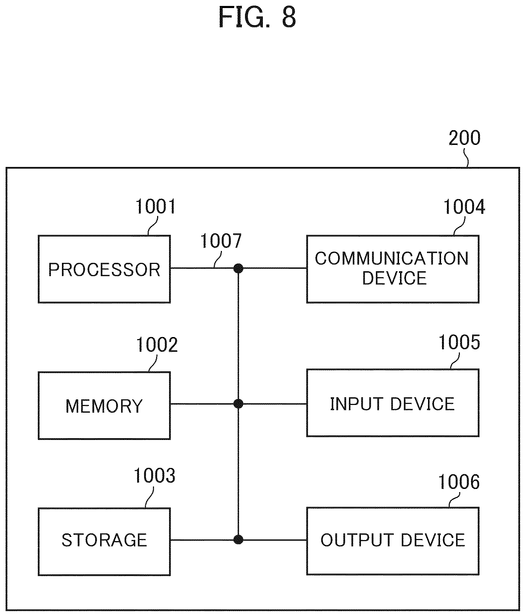

Furthermore, the UE 200 described above can function as a computer that performs the processing of the radio communication method of the present disclosure. Fig. 8 is a diagram illustrating an example of a hardware configuration of the UE 200. As illustrated in Fig. 8, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks (see Fig. 4) of the UE 200 can be realized by any of hardware elements of the computer device or a desired combination of the hardware elements.

In addition, each function of the UE 200 is realized by causing the processor 1001 to perform operation by loading predetermined software (program) on the hardware such as the processor 1001 and the memory 1002, controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

In addition, the processor 1001 reads a program (program code), a software module, data, and the like from the storage 1003 and/or the communication device 1004 into the memory 1002, and executes various types of processing according to the data. As the program, a program that is capable of executing on the computer at least a part of the operation described in the above embodiments is used. Alternatively, various types of processing described above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these types of hardware.

Notification of information is not limited to that described in the aspect/embodiment in the present disclosure, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the aspects/embodiments described in the present disclosure may be exchanged. For example, the various steps and the sequence of the steps of the methods described in the present disclosure are exemplary and are not limited to the specific order described above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input / output can be overwritten, updated, or added. The information can be eliminated after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like described in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (remote radio head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), and a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows communication between a base station and a mobile station to be replaced with communication between a plurality of mobile stations (for example, may be referred to as device-to-device (D2D), vehicle-to-everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The radio frame may be composed of one or a plurality of frames in the time domain. One frame or each of the plurality of frames in the time domain may be referred to as a subframe.

The subframe may be composed of one or a plurality of slots in the time domain. The subframe may also be a fixed time length (for example, 1 ms) that does not depend on numerology.

The numerology may be a communication parameter applied to at least one of transmission and reception of a certain signal or channel. The numerology may indicate at least one of, for example, subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in a time domain, and the like.

The slot may be composed of one or a plurality of symbols (orthogonal frequency division multiplexing (OFDM)) symbols, single carrier frequency division multiple access (SC-FDMA) symbol, and the like in the time domain. The slot may be a time unit based on numerology.

The slot may include a plurality of mini-slots. Each mini-slot may be composed of one or a plurality of symbols in the time domain. In addition, the mini-slot may be referred to as a sub-slot. The mini-slot may be configured with a smaller number of symbols than that of the slot. A PDSCH (or PUSCH) transmitted in a time unit larger than a mini-slot may be referred to as a PDSCH (or PUSCH) mapping type A. A PDSCH (or PUSCH) transmitted using a mini-slot may be referred to as a PDSCH (or PUSCH) mapping type B.

All of the radio frame, the subframe, the slot, the mini-slot, and the symbol represent time units at the time of transmitting a signal. The radio frame, the subframe, the slot, the mini-slot, and the symbol may have different names corresponding thereto, respectively.

For example, one subframe may be referred to as a transmission time interval (TTI), a plurality of consecutive subframes may be referred to as TTI, and one slot or one mini-slot may be referred to as TTI. That is, at least one of the subframe and the TTI may be a subframe (1 ms) in the existing LTE, a period (for example, 1 to 13 symbols) shorter than 1 ms, or a period longer than 1 ms. Note that a unit representing TTI may be called a slot, a mini-slot, or the like instead of a subframe.

Here, the TTI refers to, for example, a minimum time unit of scheduling in radio communication. For example, in an LTE system, a base station performs scheduling that allocates radio resources (frequency bandwidths, transmission power, and the like, that can be used in each user terminal) to each user terminal in a unit of the TTI. Note that the definition of the TTI is not limited thereto.

The TTI may be a transmission time unit such as a channel-encoded data packet (transport block), a code block, and a codeword, or may also be a processing unit such as scheduling or link adaptation. Note that when the TTI is given, a time interval (for example, the number of symbols) in which the transport block, the code block, the codeword, and the like are actually mapped may be shorter than the TTI.

Note that when one slot or one mini-slot is referred to as the TTI, one or more TTIs (that is, one or more slots or one or more mini-slots) may be the minimum time unit of the scheduling. Further, the number of slots (the number of mini-slots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a mini-slot, a sub-slot, a slot, and the like.

Note that the long TTI (for example, normal TTI, subframe, and the like) may be read as a TTI having a time length exceeding 1 ms, and the short TTI (for example, a shortened TTI) may be read as a TTI that is less than the long TTI and has a TTI length of 1 ms or more.

The resource block (RB) is a resource allocation unit in the time domain and the frequency domain, and may include one or a plurality of consecutive subcarriers in the frequency domain. The number of subcarriers included in the RB may be the same regardless of the numerology, for example, 12. The number of subcarriers included in the RB may be determined based on the numerology.

Further, the time domain of the RB may include one or a plurality of symbols, and may have a length of 1 slot, 1 mini-slot, 1 subframe, or 1 TTI. 1 TTI, 1 subframe, and the like may be composed of one or a plurality of resource blocks.

Note that one or a plurality of RBs may be referred to as a physical resource block (physical RB: PRB), a subcarrier group (SCG), a resource element group (REG), a PRB pair, an RB pair, and the like.

In addition, the resource block may be composed of one or a plurality of resource elements (RE). For example, one RE may be a radio resource region of one subcarrier and one symbol.

A bandwidth part (BWP) (may be called a partial bandwidth, and the like) may represent a subset of consecutive common resource blocks (RBs) for certain numerology in a certain carrier. Here, the common RB may be specified by an RB index based on a common reference point of the carrier. The PRB may be defined in a certain BWP and numbered within the BWP.

The BWP may include a UL BWP and a DL BWP. One or a plurality of BWPs may be configured in one carrier for the UE.

At least one of the configured BWPs may be active, and it may not be assumed that the UE transmits and receives a predetermined signal/channel outside the active BWP. Note that "cell", "carrier", and the like in the present disclosure may be read as "BWP".

The structures of the radio frame, the subframe, the slot, the mini-slot, the symbol, and the like, described above are merely examples. For example, the configurations of the number of subframes included in a radio frame, the number of slots per subframe or radio frame, the number of mini-slots included in the slot, the number of symbols and RBs included in the slot or mini-slot, the number of subcarriers included in the RB, the number of symbols in the TTI, the symbol length, the cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit" a, "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles shall include plurality of nouns following these articles.

The term "determining" used in the present disclosure may include a wide variety of operations. The "determining" may include, for example, judging, calculating, computing, processing, deriving, investigating, looking up (search, inquiry) (for example, searching in a table, a database or another data structure), and may include ones regarding ascertaining as the "determining". In addition, the "determining" may include one regarding "receiving" (for example, receiving information), transmitting (for example, transmitting information), an input, an output, accessing (for example, accessing data in memory) as "determining". In addition, the "determining" may include ones regarding ones such as resolving, selecting, choosing, establishing, and comparing as "determining". That is, the "determining" can include considering some operation as performing the "determining". In addition, the "determining" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100: gNB
- 200: UE
- 210: Radio signal transmitting and receiving unit
- 220: Amplifier unit
- 230: Modulation and demodulation unit
- 240: Control signal and reference signal processing unit
- 250: Encoding/decoding unit
- 260: Data transmitting and receiving unit
- 270: Control unit
- 1001: Processor
- 1002: Memory
- 1003: Storage
- 1004: Communication device
- 1005: Input device
- 1006: Output device
- 1007: Bus

## Claims

1. A terminal, comprising:
a receiving unit that receives a radio signal; and
a control unit that measures the radio signal based on a measurement window applied to a second frequency band when using the second frequency band different from a first frequency band allocated for mobile communication

2. The terminal according to claim 1, wherein
the control unit measures the radio signal based on the measurement window corresponding to one or a plurality of bands within the second frequency band.

3. The terminal according to claim 1 or 2, wherein
the control unit measures the radio signal based on a start position of a radio resource corresponding to the measurement window.

4. The terminal according to claim 2, further comprising:
an information receiving unit that receives band information indicating the band to be measured,
wherein the control unit determines the measurement window corresponding to the band based on the band information.
